# EUROPÄISCHE PATENTANMELDUNG

(11) **EP 4 357 769 A2**
(43) Veröffentlichungstag der Anmeldung: **24.04.2024**
(21) Anmeldenummer: 23192394.7
(22) Anmeldetag: 21.08.2023
(51) Int. Cl.: G01N 27/28, G01N 27/403, G01N 27/416

(54) **MESSVORRICHTUNG ZUM BESTIMMEN DES PH-WERTS EINER MESSLÖSUNG**

(30) Priorität: 20.10.2022 DE 102022127768
(71) Anmelder: Pfaudler GmbH, 68753 Waghäusel (DE)
(72) Erfinder: TABERT, Viktor, 76676 Graben-Neudorf (DE); HESSDORFER, Holger, 76344 Eggenstein-Leopoldshafen (DE); HUNGELE, Martin, 76698 Ubstadt-Weiher (DE)
(74) Vertreter: Meissner Bolte Partnerschaft mbB

(57) **Zusammenfassung**

Betroffen ist eine Messvorrichtung zum Bestimmen des pH-Werts einer Messlösung aufweisend:
einen Kopf (10) und einen, insbesondere leitfähigen, vorzugsweise metallischen, Grundkörper (11), welche miteinander verbunden sind;
eine innerhalb des Grundkörpers (11) verlaufende Elektrolytstrecke (13), in der zumindest teilweise eine Referenzelektrode (22) angeordnet ist;
wobei auf dem Grundkörper (11) außenseitig eine Messelektrode, vorzugsweise aus pH-sensitivem Email (25), angeordnet ist;
wobei zumindest ein unteres Ende des Grundkörpers (11) zum Eintauchen in die Messlösung ausgebildet ist;
wobei in dem Grundkörper zum Abtrennen der Elektrolytstrecke (13) gegenüber der Messlösung ein Diaphragma (27) aufgenommen ist, wobei die Referenzelektrode (22) über das Diaphragma (27) in elektrischem Kontakt mit der Messlösung bringbar ist; und wobei der Grundkörper (11) doppelwandig ausgebildet ist, wobei vorzugsweise ein Temperatur-Sensor (21) zwischen den zwei Wänden des Grundkörpers (11) angeordnet ist.

## Beschreibung

Die Erfindung betrifft eine Messvorrichtung zum Bestimmen des pH-Werts einer Messlösung sowie ein Verfahren zum Austauschen eines Diaphragmas einer Messvorrichtung zum Bestimmen des pH-Werts einer Messlösung.

Beispielsweise aus DE 27 21 939 B2 ist eine Messsonde zum Bestimmen der Ionenkonzentration in Flüssigkeiten, insbesondere für pH-Messungen, mit einem emaillierten rohrförmigen Stahlkörper mit einer äußeren, als Messelektrode dienenden Email-Beschichtung, in dem eine Bezugselektrode abdichtend in eine koaxiale Lage eingesetzt ist, deren Elektrolyt über ein Diaphragma mit der Messflüssigkeit in Verbindung gebracht wird, bekannt.

Messvorrichtungen dieser Art weisen einen vergleichsweise komplexen Aufbau auf. Insbesondere ist es dabei problematisch, dass eine Elektrolytstrecke üblicherweise aufwändig (beispielsweise mit X-Ringen) abgedichtet werden muss. Weiterhin wird die Reparaturfähigkeit von bekannten Messsonden als verbesserungswürdig angesehen.

Es ist Aufgabe der Erfindung, eine Messvorrichtung zum Bestimmen des pH-Werts einer Messlösung vorzuschlagen, die eine weitere Verbesserung gegenüber dem Stand der Technik darstellt, insbesondere im Hinblick auf eine Komplexität der Konstruktion und/oder eine Reparaturfähigkeit. Weiterhin ist es Aufgabe der Erfindung ein entsprechendes Verfahren zum Austauschen eines Diaphragmas einer Messvorrichtung zum Bestimmen des pH-Wertes der Messlösung vorzuschlagen.

Diese Aufgabe wird insbesondere durch die Merkmale des Anspruchs 1 gelöst.

Insbesondere wird die Aufgabe gemäß einem ersten Aspekt gelöst durch eine Messvorrichtung zum Bestimmen des pH-Werts einer Messlösung aufweisend: einen Kopf und einen, insbesondere leitfähigen, vorzugsweise metallischen, Grundkörper, welche miteinander verbunden sind; eine innerhalb des Grundkörpers verlaufende Elektrolytstrecke, in der zumindest teilweise eine Referenzelektrode angeordnet ist; wobei auf dem Grundkörper außenseitig eine Messelektrode, vorzugsweise aus PH-sensitivem Email, angeordnet ist; wobei zumindest ein unteres Ende des Grundkörpers zum Eintauchen in die Messlösung ausgebildet ist; wobei der Grundkörper zum Abtrennen der Elektrolytstrecke gegenüber der Messlösung ein Diaphragma aufweist, wobei die Referenzelektrode über das Diaphragma in elektrischem Kontakt mit der Messlösung bringbar ist; und wobei der Grundkörper doppelwandig ausgebildet ist. Vorzugsweise ist ein Temperatur-Sensor zwischen den zwei Wänden des Grundkörpers angeordnet.

Der (vorzugsweise metallische, weiter vorzugsweise aus Stahl ausgebildete) Grundkörper ist gemäß dem ersten Aspekt doppelwandig ausgebildet. Dadurch kann ein innerer Bauraum geschaffen werden, der auf einfache Art und Weise von der Elektrolytstrecke abgekapselt ist. Wenn beispielsweise in diesem Bauraum (innerhalb der beiden Einzelwände, die die Doppelwand ausbilden) ein Temperatur-Sensor angeordnet ist, muss dieser nicht auf andere Art und Weise (z. B. durch X-Ringe) aufwändig gegenüber der Elektrolytstrecke abgedichtet werden. Gegebenenfalls können auch andere Bauteile, insbesondere elektrische und/oder elektronische Bauteile, auf einfache und sichere Art und Weise innerhalb der Doppelwand angeordnet werden. Dadurch kann der Aufbau der Messvorrichtung vereinfacht werden, wobei die Zuverlässigkeit der Messvorrichtung zugleich erhöht wird.

Gemäß einem zweiten Aspekt der Erfindung wird die obige Aufgabe durch eine Messvorrichtung zum Bestimmen des pH-Werts einer Messlösung gelöst, wobei der zweite Aspekt vorzugsweise mit dem ersten Aspekt kombiniert werden kann, aufweisend: einen Kopf und einen, insbesondere leitfähigen, vorzugsweise metallischen, Grundkörper, welche miteinander verbunden sind;
eine innerhalb des Grundkörpers verlaufende Elektrolytstrecke, in der zumindest teilweise eine Referenzelektrode angeordnet ist; wobei auf dem Grundkörper außenseitig eine Messelektrode, vorzugsweise aus PH-sensitivem Email, angeordnet ist; wobei zumindest ein unteres Ende des Grundkörpers zum Eintauchen in die Messlösung ausgebildet ist; wobei der Grundkörper zum Abtrennen der Elektrolytstrecke gegenüber der Messlösung ein Diaphragma aufweist, wobei die Referenzelektrode über das Diaphragma in elektrischem Kontakt mit der Messlösung bringbar ist; und wobei das Diaphragma sich verjüngend, vorzugsweise kegelstumpfförmig, ausgebildet ist und/oder austauschbar ist.

Ein Gedanke des zweiten Aspekts liegt darin, dass das Diaphragma sich verjüngend (insbesondere sich in Richtung des dem Kopf abgewandten Ende des Grundkörpers verjüngend), vorzugsweise kegelstumpfförmig, ausgebildet ist. Dadurch können eine Einbringung und insbesondere ein Austausch des Diaphragmas erleichtert werden. Alternativ oder zusätzlich ist es bevorzugt, wenn (auch im Hinblick auf den ersten und nachfolgend beschriebenen dritten Aspekt der Erfindung) das Diaphragma austauschbar angeordnet ist. Unter einer austauschbaren Ausführung des Diaphragmas ist insbesondere zu verstehen, dass dieses isoliert (ohne weitere Bestandteile oder bestenfalls mit geringfügigen weiteren Bestandteilen, die vorzugsweise insgesamt maximal das 3-fache, ggf. maximal das 0,5-fache des Gewichts des Diaphragmas aufweisen) entfernt werden kann und durch ein neues Diaphragma (beispielsweise im Schadensfall) ersetzt werden kann. Dadurch wird die Nachhaltigkeit verbessert. Korrespondierend zu einer kegelstumpfförmigen Ausbildung des Diaphragmas kann auch der (insbesondere metallische) Grundkörper und/oder eine sich auf dem Grundkörper befindliche Schicht (z. B. Email-Beschichtung) kegelstumpfförmig ausgebildet sein (insbesondere komplementär zu der kegelstumpfförmigen Ausbildung des Diaphragmas).

Gemäß einem dritten Aspekt der Erfindung wird die obige Aufgabe insbesondere gelöst durch eine Messvorrichtung zum Bestimmen des pH-Werts einer Messlösung, wobei der dritte Aspekt vorzugsweise mit dem ersten und/oder zweiten Aspekt kombinierbar ist, aufweisend: einen Kopf und einen, insbesondere leitfähigen, vorzugsweise metallischen, Grundkörper, welche miteinander verbunden sind; eine innerhalb des Grundkörpers verlaufende Elektrolytstrecke, in der zumindest teilweise eine Referenzelektrode angeordnet ist; wobei auf dem Grundkörper außenseitig eine Messelektrode, vorzugsweise aus PH-sensitivem Email, angeordnet ist; wobei zumindest ein unteres Ende des Grundkörpers zum Eintauchen in die Messlösung ausgebildet ist; und wobei in dem Grundkörper zum Abtrennen der Elektrolytstrecke gegenüber der Messlösung ein Diaphragma aufgenommen ist, wobei die Referenzelektrode über das Diaphragma in elektrischem Kontakt mit der Messlösung bringbar ist; wobei der Kopf und der Grundkörper derart miteinander lösbar verbunden sind, dass das Diaphragma von einem dem Kopf zugewandten Ende des Grundkörpers her zugänglich ist, wenn der Kopf von dem Grundkörper gelöst ist.

Ein Gedanke des dritten Aspektes liegt darin, den Kopf und den Grundkörper derart lösbar miteinander zu verbinden, dass das Diaphragma von einem dem Kopf zugewandten Ende des Grundkörpers her zugänglich ist. Eine derartige Maßnahme erleichtert ein Austauschen des Diaphragmas und damit eine Reparatur der Messvorrichtung, wenn das Diaphragma beschädigt ist. Auch kann ein (neues) Diaphragma auf einfache Art und Weise innerhalb des Grundkörpers angeordnet werden. Bei einem Austausch des Diaphragmas kann das (alte) Diaphragma beispielsweise von einem dem Kopf abgewandten Ende des Grundkörpers ausgehend in den Grundkörper hineingedrückt werden und dann von dem anderen (dem Kopf zugewandten Ende) (des Grundkörpers) entfernt werden kann. Dies ist im Stand der Technik, bei dem der Kopf und der Grundkörper üblicherweise unlösbar (stoffschlüssig) miteinander verbunden sind, nicht möglich.

In alternativen Ausführungsformen kann das Diaphragma zylindrisch ausgebildet sein.

Vorzugsweise ist der Grundkörper von der Masse (galvanisch) entkoppelt. Eine Entkoppelung der Elektrolytstrecke kann damit entfallen, so dass beispielsweise aufwändige Dichtungen (z. B. X-Ring-Dichtungen) nicht unbedingt notwendig sind.

In Ausführungsformen kann der Grundkörper rohrförmig (rohrartig) ausgebildet sein.

Der Grundkörper kann sich optional in axialer Richtung erstrecken, beispielsweise über mindestens 50 % und/oder mindestens 70 % einer (axialen) Erstreckung der Messvorrichtung.

Der Grundkörper ist vorzugsweise zu mindestens 50 Gew.-%, weiter vorzugsweise mindestens 80 Gew.-%, noch weiter mindestens 90 Gew.-%, ggf. 100 Gew.-% aus Metall, vorzugsweise Stahl.

Der Grundkörper kann einstückig, insbesondere monolithisch, ausgebildet sein. Alternativ oder zusätzlich umfasst der Grundkörper zwei Einzelwände, die gemeinsam eine Doppelwand ausbilden und an ihrem dem Kopf abgewandten Ende einstückig (bzw. monolithisch) miteinander verbunden sind. Ein jeweiliges dem Kopf zugewandtes Ende der Einzelwände kann zumindest abschnittsweise offen sein bzw. mindestens eine Öffnung aufweisen, beispielsweise um (elektrische) Leitungen, insbesondere für einen Temperatursensor, durchzuführen. Die beiden Einzelwände des Grundkörpers können jeweils für sich rohrförmig (rohrartig) ausgebildet sein.

Eine weiter unten noch im Detail erläuterte Email-Beschichtung kann (unmittelbar oder mittelbar) auf dem Grundkörper angeordnet sein, ist diesem jedoch im vorliegenden Zusammenhang begrifflich nicht zugeordnet.

Der Kopf ist zumindest abschnittsweise, ggf. überwiegend aus Kunststoff (insbesondere mindestens einem Polymer) gefertigt, beispielsweise zu mindestens 50 Gew.-% oder ggf. zu mindestens 70 Gew.-%. Der Kopf kann eine Referenzelektrode (zumindest abschnittsweise) aufnehmen.

Alternativ oder zusätzlich kann der Kopf eine Elektrolyt-Einfüllstruktur aufweisen, um Elektrolyt in den Kopf und damit (über den Kopf) in den Grundkörper bzw. die Elektrolytstrecke einzufüllen. Der Kopf kann weiterhin Anschlussstrukturen zum (elektrischen) Anschließen der Messvorrichtung an eine (ggf. externe) Auswerteeinheit aufweisen und/oder mit einer solchen Anschlussstruktur verbunden sein.

Der Kopf kann weiterhin Verbindungsleitungen zwischen der Messelektrode und/oder Referenzelektrode und/oder der ORP-Elektrode (Rhodium-Elektrode) und/oder einem/dem Temperatur-Sensor aufweisen. Konkret kann der Kopf zwei bzw. drei Anschlüsse für die zwei bzw. drei Elektroden und ggf. zwei weitere Anschlüsse für den Temperatur-Sensor aufweisen. Ein Anschluss für die Masse kann ggf. entfallen.

In einer konkreten Ausführungsform kann der Kopf dazu ausgebildet sein, mehrere (insbesondere fünf) Kontakte elektrisch zu isolieren.

Eine Verbindungsvorrichtung zum (lösbaren) Verbinden von Kopf und Grundkörper weist vorzugsweise mindestens eine (ggf. genau eine) Schraube, insbesondere mindestens eine (ggf. genau eine) Madenschraube, auf. Weiter vorzugsweise ist die Schraube (insbesondere Madenschraube) isoliert. Dadurch kann auf einfache Art und Weise eine lösbare Verbindung zwischen Kopf und Grundkörper ermöglicht werden.

Vorzugsweise ist auf dem Grundkörper eine Beschichtung aus Email angeordnet. Das Email ist (ggf. abgesehen von einem leitfähigen Bereich, der die Messelektrode ausgebildet) vorzugsweise nicht (elektrisch) leitfähig.

Die Email-Beschichtung kann sich in axialer Richtung über mindestens 50 %, ggf. mindestens 80 % und/oder über höchstens 95 % einer (axialen) Erstreckung des Grundkörpers außenseitig erstrecken. Alternativ oder zusätzlich kann sich die Email-Beschichtung über höchstens 50 %, weiter vorzugsweise über höchstens 20 % oder höchstens 10 % einer (axialen) Erstreckung des Grundkörpers innenseitig erstrecken. In Ausführungsformen erstreckt sich die Email-Beschichtung innenseitig des Grundkörpers nur über einen dem Kopf abgewandten Abschnitt des Grundkörpers. Alternativ oder zusätzlich kann sich die Email-Beschichtung außenseitig des Grundkörpers über eine mindestens 2-mal, vorzugsweise mindestens 4-mal, noch weiter vorzugsweise mindestens 6-mal so große Strecke erstrecken, wie innenseitig.

Die Referenzelektrode erstreckt sich vorzugsweise zumindest überwiegend in axialer Richtung der Messvorrichtung, insbesondere konzentrisch (in axialer Richtung betrachtet) zu dem Grundkörper. Insbesondere wenn die Referenzelektrode in Axialrichtung betrachtet konzentrisch mit dem Grundkörper ausgebildet ist bzw. mit diesem fluchtet, kann beispielsweise ein Knick der Elektrode (insbesondere eines durch die Elektrode ausgebildeten Drahtes bzw. leitfähigen Fadens) vermieden werden, was die Montage vereinfacht.

Die Messvorrichtung weist vorzugsweise eine Verschlusskappe auf, die auf den Kopf der Messvorrichtung vorzugsweise aufschiebbar (alternativ oder zusätzlich: aufschraubbar) ist. Die Verschlusskappe kann als Bestandteil des Kopfes betrachtet werden.

Die Messvorrichtung weist vorzugsweise weiterhin eine ORP-Elektrode (Elektrode zur Messung eine Oxidationsreduktionspotentials, insbesondere Rhodium-Elektrode) auf. Die ORP-Elektrode ist vorzugsweise an einer Außenfläche der Email-Beschichtung angeordnet. Eine Messung des Oxidationsreduktionspotentials kann insbesondere zwischen der Bezugselektrode und der ORP-Elektrode erfolgen. Es können somit ausführungsgemäß mit derselben Messvorrichtung sowohl ein PH-Wert (insbesondere mittels der Messelektrode und der Bezugselektrode) sowie ein Oxidationsreduktionspotential (insbesondere mittels der ORF-Elektrode und der Bezugselektrode) gemessen werde. Die (beiden) Messungen können simultan oder zu verschiedenen Zeiten durchgeführt werden.

Die obige Aufgabe wird weiterhin insbesondere gelöst durch ein Verfahren zum Austauschen eines Diaphragmas einer Messvorrichtung zum Bestimmen des pH-Werts einer Messlösung, vorzugsweise gemäß dem ersten und/oder zweiten und/oder dritten Aspekt, aufweisend folgende Schritte:
a) Lösen eines Kopfs der Messvorrichtung von einem, insbesondere leitfähigen, vorzugsweise metallischen, Grundkörper der Messvorrichtung;
b) Entfernen eines Diaphragmas von dem Grundkörper;
c) Einbringen eines neuen Diaphragmas in den Grundkörper; und
d) Verbinden des Kopfs mit dem Grundkörper.

Im Schritt b) wird das Diaphragma vorzugsweise von einem dem Kopf der Messvorrichtung zugewandten Ende des Grundkörpers entfernt. Alternativ oder zusätzlich wird im Schritt c) das (neue) Diaphragma über das dem Kopf zugewandte Ende des Grundkörpers eingeführt.

Im Schritt b) kann beispielsweise Druck auf das Diaphragma von einem dem Kopf abgewandten Ende des Grundkörpers ausgeübt werden. Alternativ oder zusätzlich kann im Schritt c) (insbesondere in einer Endphase der Montage) Druck von einem dem Kopf des Grundkörpers zugewandten Ende des Diaphragmas ausgehend ausgeübt werden.

Schritt a) und Schritt d) umfasst vorzugsweise mindestens einen (oder genau einen) Schraubvorgang und/oder die Verwendung mindestens einer (oder genau einer) Schraube, insbesondere Madenschraube.

Eine Verbindung zwischen Kopf und Grundkörper kann weiterhin eine insbesondere metallische Hülse (z. B. als Prozessanschluss-Adapter) umfassen. Weiterhin kann ein dem Grundkörper abgewandtes Ende des Kopfes mit einer (elektrischen) Anschlussstruktur (z. B. Vario-Pin-Anschluss) verbunden sein.

Weitere Ausführungsformen ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Schnittansicht einer erfindungsgemäßen Messvorrichtung;
- Fig. 2: einen unteren Abschnitt der Messvorrichtung gemäß Fig. 1; und
- Fig. 3: einen oberen Abschnitt der Messvorrichtung gemäß Fig. 1.

In der nachfolgenden Beschreibung werden für gleiche und gleich wirkende Teile dieselben Bezugszeichen verwendet.

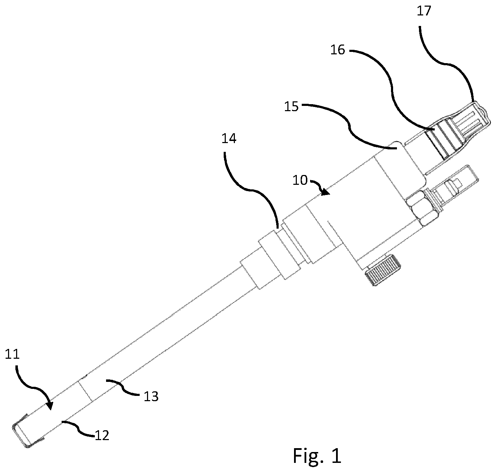

Fig. 1 zeigt eine schematische Schnittansicht einer erfindungsgemäßen Messvorrichtung. Die Messvorrichtung umfasst einen Kopf 10 sowie einen (metallischen) Grundkörper 11, auf dem eine Email-Beschichtung 12 (außenseitig und zumindest abschnittsweise innenseitig) aufgebracht (beispielsweise eingebrannt) ist. Der Grundkörper 11 ist vorzugsweise (zumindest überwiegend) aus Stahl gebildet und weist in seinem Inneren eine Elektrolytstrecke 13 auf. Im Übergangsbereich zwischen Kopf 10 und Grundkörper 11 ist ein Adapter 14 (z. B. Metallhülse), vorzugsweise mit Spritzwasserschutz vorgesehen, der zur Befestigung eines Prozessadapters dienen kann. Beispielsweise über einen weiteren Adapter 15 (z. B. Metallhülse) ist der Kopf 10 mit einem Steckverbinder 16 verbunden. Dieser kann wiederum durch eine Kappe 17 (z. B. aus Kunststoff) ausgebildet sein.

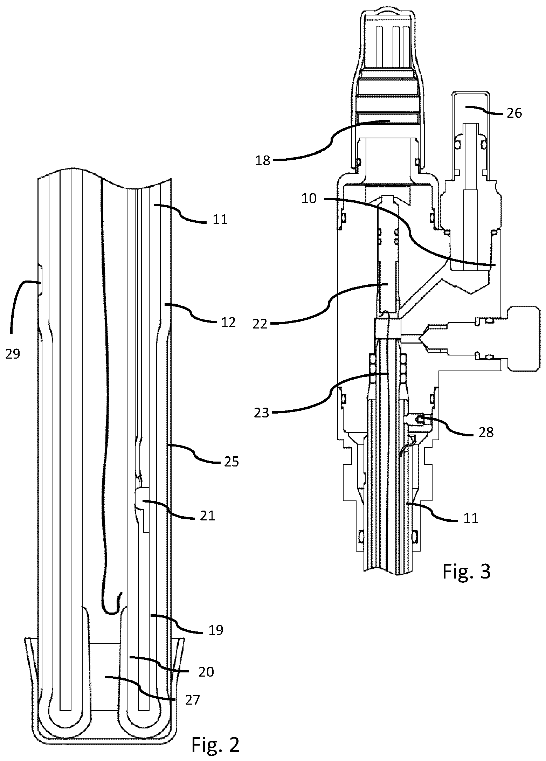

Weitere Details der Messvorrichtung sind in den Fig. 2 und 3 erkennbar, die einen unteren bzw. oberen Abschnitt der Messvorrichtung zeigen. Konkret ist in Fig. 3 ein Elektrolyt-Anschluss 26 gezeigt, über den Elektrolyt in den Kopf 10 und damit über den Kopf 10 zu der Elektrolytstrecke 13 innerhalb des Grundkörpers 11 geleitet wird. Weiterhin sind in Fig. 3 Anschlussstrukturen 18 zum elektrischen Verbinden der Elektroden bzw. des nachfolgend noch beschriebenen TemperaturSensors mit einer (ggf. externen) Auswerteeinheit erkennbar. Konkret sind dazu fünf Anschlüsse vorgesehen (von denen nur drei in der Figur erkennbar sind).

Weiterhin ist in Fig. 2 und 3 erkennbar, dass der Grundkörper 11 doppelwandig ausgebildet ist, also eine äußere Wand 19 und eine innere Wand 20 aufweist. An ihrem dem Kopf 10 abgewandten Ende sind äußere Wand 19 und innere Wand 20 miteinander verbunden (insbesondere einstückig, vorzugsweise monolithisch), so dass ein Innenraum zwischen innerer Wand 20 und äußerer Wand 19 an diesem Ende dicht ist (und auch durch keine sonstigen Strukturen unterbrochen ist).

Ein dem Kopf 10 zugewandtes Ende des Grundkörpers 11 ist teilweise offen, insbesondere um Verbindungsleitungen zu dem nachfolgend näher beschriebenen Temperatur-Sensor 21 (siehe Fig. 2) durchzulassen. Eine Referenzelektrode 22 umfasst einen metallischen Faden bzw. Draht 23, der in der Elektrolytstrecke verläuft. Der Temperatur-Sensor 21 ist (siehe Fig. 2) zwischen den Wänden 19, 20 angeordnet und durch die innere Wand 20 von der Elektrolytstrecke 13 getrennt.

Auf dem Grundkörper 11 ist eine Email-Beschichtung 12 aufgebracht. Auf dieser (an einem dem Kopf 10 abgewandten Ende des Grundkörpers) ist wiederum eine pH-sensitive Email-Beschichtung (Email-Schicht) 25 aufgebracht. Diese ist mit einer nicht in den Figuren dargestellten elektrischen Verbindung (z. B. Draht und/oder Band, ggf. aus Platin und/oder Silber) mit der Anschlussstruktur 18 verbunden.

Insgesamt ist festzustellen, dass ein innerer Bauraum zwischen den Wänden 19, 20 aufgrund der doppelten Wandung von der Elektrolytstrecke abgekapselt ist.

Der Grundkörper 11 ist galvanisch von der Masse entkoppelt, so dass eine Entkoppelung der Elektrolytstrecke entfallen kann und beispielsweise keine anfälligen X-Ring-Dichtungen notwendig werden.

Ein Durchmesser der pH-sensitiven Email-Beschichtung beträgt 12 mm (in einem horizontalen Schnitt gemäß Fig. 2 bzw. einem Querschnitt zur axialen Erstreckung des Grundkörpers 11).

Generell weist eine untere durch den Grundkörper 11 getragene Struktur einen Durchmesser von mindestens 6 mm oder mindestens 10 mm und/oder höchstens 20 mm oder höchstens 15 mm auf.

Die Elektrolytstrecke 13 ist an einem dem Kopf 10 abgewandten Ende des Grundkörpers 11 von einem Diaphragma 27 abgedichtet. Vorzugsweise wird im Betrieb ein Überdruck für die Elektrolytstrecke 13 bereitgestellt, so dass zwar Elektrolyt 13 nach außen treten kann, jedoch keine Messlösung nach innen treten kann.

Das Diaphragma 27 ist kegelstumpfförmig (insbesondere als Morsekegel) ausgebildet und austauschbar. Dazu kann beispielsweise eine Schraube (Madenschraube) 28 gelöst werden, so dass Kopf 10 und der untere, durch den Grundkörper 11 getragene Abschnitt voneinander gelöst werden können. Das (alte) Diaphragma 27 kann dann durch ein dem Kopf zugewandtes Ende des Grundkörpers 11 entfernt werden und ein (neues) Diaphragma kann entsprechend von oben wiedereingesetzt werden.

In Fig. 2 ist weiterhin eine ORP-Elektrode 29 (Elektrode zur Messung eine Oxidationsreduktionspotentials, insbesondere Rhodium-Elektrode) erkennbar, die an einer Außenfläche der Email-Beschichtung 12 angeordnet ist.

Insgesamt wird ein deutlich vereinfachtes Design erzielt, das vergleichsweise kompakt ist und mit wenigen Bauteilen auskommt.

An dieser Stelle sei darauf hingewiesen, dass alle oben beschriebenen Teile für sich alleine gesehen und in jeder Kombination, insbesondere die in den Zeichnungen dargestellten Details, als Weiterbildungen der Erfindung beansprucht werden. Abänderungen hiervon sind möglich.

An dieser Stelle sei weiterhin darauf hingewiesen, dass alle oben beschriebenen Teile bzw. Merkmale jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern etc. - oder in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Worte insbesondere oder runde Klammern, im jeweiligen Kontext nicht-zwingende Merkmale explizit kennzeichnen sollen.

Es wird zuletzt darauf hingewiesen, dass die vorliegende Schutzrechtsanmeldung (im Falle der Eintragung bzw. Erteilung: das vorliegende Schutzrecht) einen möglichst breiten Schutz der Erfindung zum Ziel hat. Es wird gebeten, dies beim Lesen zu beachten, insbesondere insoweit es (Zwischen-)Verallgemeinerungen von explizit offenbarten Merkmalen oder Merkmalskombinationen betrifft.

### Bezugszeichenliste

- 10: Kopf
- 11: Grundkörper
- 12: Email-Beschichtung
- 13: Elektrolytstrecke
- 14: Adapter
- 15: Adapter
- 16: Steckverbinder
- 17: Kappe
- 18: Anschlussstruktur
- 19: äußere Wand
- 20: innere Wand
- 21: Temperatur-Sensor
- 22: Referenzelektrode
- 23: Draht
- 25: pH-sensitive Email-Schicht
- 26: Elektrolyt-Anschluss
- 27: Diaphragma
- 28: Schraube
- 29: ORP-Elektrode

## Patentansprüche

1. Messvorrichtung zum Bestimmen des pH-Werts einer Messlösung aufweisend:
einen Kopf (10) und einen, insbesondere leitfähigen, vorzugsweise metallischen, Grundkörper (11), welche miteinander verbunden sind;
eine innerhalb des Grundkörpers (11) verlaufende Elektrolytstrecke (13), in der zumindest teilweise eine Referenzelektrode (22) angeordnet ist;
wobei auf dem Grundkörper (11) außenseitig eine Messelektrode, vorzugsweise aus pH-sensitivem Email (25), angeordnet ist;
wobei zumindest ein unteres Ende des Grundkörpers (11) zum Eintauchen in die Messlösung ausgebildet ist;
wobei in dem Grundkörper zum Abtrennen der Elektrolytstrecke (13) gegenüber der Messlösung ein Diaphragma (27) aufgenommen ist, wobei die Referenzelektrode (22) über das Diaphragma (27) in elektrischem Kontakt mit der Messlösung bringbar ist; und wobei der Grundkörper (11) doppelwandig ausgebildet ist, wobei vorzugsweise ein Temperatur-Sensor (21) zwischen den zwei Wänden des Grundkörpers (11) angeordnet ist.

2. Messvorrichtung zum Bestimmen des pH-Werts einer Messlösung, insbesondere nach Anspruch 1, aufweisend:
einen Kopf (10) und einen, insbesondere leitfähigen, vorzugsweise metallischen, Grundkörper (11), welche miteinander verbunden sind;
eine innerhalb des Grundkörpers (11) verlaufende Elektrolytstrecke (13), in der zumindest teilweise eine Referenzelektrode (22) angeordnet ist;
wobei auf dem Grundkörper (11) außenseitig eine Messelektrode, vorzugsweise aus PH-sensitivem Email (25), angeordnet ist;
wobei zumindest ein unteres Ende des Grundkörpers (11) zum Eintauchen in die Messlösung ausgebildet ist;
wobei in dem Grundkörper zum Abtrennen der Elektrolytstrecke (13) gegenüber der Messlösung ein Diaphragma (27) aufgenommen ist, wobei die Referenzelektrode (22) über das Diaphragma in elektrischem Kontakt mit der Messlösung bringbar ist;
und wobei das Diaphragma (27) sich verjüngend, vorzugsweise kegelstumpfförmig, ausgebildet ist und/oder austauschbar ist.

3. Messvorrichtung zum Bestimmen des pH-Werts einer Messlösung, insbesondere nach Anspruch 1 oder 2, aufweisend:
einen Kopf (10) und einen, insbesondere leitfähigen, vorzugsweise metallischen, Grundkörper (11), welche miteinander verbunden sind;
eine innerhalb des Grundkörpers (11) verlaufende Elektrolytstrecke (13), in der zumindest teilweise eine Referenzelektrode (22) angeordnet ist;
wobei auf dem Grundkörper (11) außenseitig eine Messelektrode, vorzugsweise aus PH-sensitivem Email (25), angeordnet ist;
wobei zumindest ein unteres Ende des Grundkörpers (11) zum Eintauchen in die Messlösung ausgebildet ist; und
wobei in dem Grundkörper zum Abtrennen der Elektrolytstrecke (13) gegenüber der Messlösung ein Diaphragma (27) aufgenommen ist, wobei die Referenzelektrode (22) über das Diaphragma (27) in elektrischem Kontakt mit der Messlösung bringbar ist;
wobei der Kopf (10) und der Grundkörper (11) derart miteinander lösbar verbunden sind, dass das Diaphragma (27) von einem dem Kopf (10) zugewandten Ende des Grundkörpers (11) her zugänglich ist, wenn der Kopf (10) von dem Grundkörper (11) gelöst ist.

4. Messvorrichtung gemäß einem der vorhergehendenden Ansprüche, wobei der Grundkörper (11) von der Masse entkoppelt ist.

5. Messvorrichtung gemäß einem der vorhergehendenden Ansprüche, wobei der Grundkörper (11) rohrförmig ist.

6. Messvorrichtung gemäß einem der vorhergehendenden Ansprüche, wobei der Grundkörper (11) einstückig ausgebildet ist.

7. Messvorrichtung gemäß einem der vorhergehendenden Ansprüche, wobei der Kopf (10) zumindest überwiegend aus Kunststoff gefertigt ist.

8. Messvorrichtung gemäß einem der vorhergehendenden Ansprüche,
wobei der Kopf (10) dazu ausgebildet ist, mehrere, insbesondere fünf, Kontaktpunkte elektrisch zu isolieren.

9. Messvorrichtung gemäß einem der vorhergehendenden Ansprüche,
wobei eine Verbindungsvorrichtung zum Verbinden von Kopf (10) und Grundkörper (11) eine Schraube (28), insbesondere eine Madenschraube, aufweist.

10. Messvorrichtung gemäß einem der vorhergehendenden Ansprüche,
wobei auf dem Grundkörper (11) eine Beschichtung aus Email (12) angeordnet ist.

11. Messvorrichtung gemäß einem der vorhergehendenden Ansprüche,
wobei sich die Referenzelektrode (22) zumindest vorwiegend in axialer Richtung der Messvorrichtung erstreckt.

12. Messvorrichtung gemäß einem der vorhergehendenden Ansprüche,
weiter aufweisend eine Verschlusskappe, wobei die Verschlusskappe auf dem Kopf (10) der Messvorrichtung aufschiebbar ist.

13. Messvorrichtung gemäß einem der vorhergehendenden Ansprüche,
weiter aufweisend eine ORP-Elektrode zur Messung eines Oxidationspotentials.

14. Verfahren zum Austauschen eines Diaphragmas einer Messvorrichtung zum Bestimmen des pH-Werts einer Messlösung, vorzugsweise einer Messvorrichtung gemäß einem der vorhergehendenden Ansprüche, aufweisend folgende Schritte:
a) Lösen eines Kopfs der Messvorrichtung von einem, insbesondere leitfähigen, vorzugsweise metallischen, Grundkörper (11) der Messvorrichtung;
b) Entfernen eines Diaphragmas (27) von dem Grundkörper (11);
c) Einbringen eines neuen Diaphragmas in den Grundkörper (11); und
d) Verbinden des Kopfs mit dem Grundkörper (11).
